**Europäisches Patentamt**

**European Patent Office**

**Office européen des brevets**

(19)

(11) Numéro de publication : **0 035 421
B1**

(12)

# FASCICULE DE BREVET EUROPÉEN

(45) Date de publication du fascicule du brevet :
**04.07.84**

(51) Int. Cl.³ : **G 01 V   3/26**

(21) Numéro de dépôt : **81400199.6**

(22) Date de dépôt : **10.02.81**

(54) **Enveloppe de sonde de diagraphie et son procédé de fabrication.**

(30) Priorité : **29.02.80 FR 8004535**

(43) Date de publication de la demande :
**09.09.81 Bulletin 81/36**

(45) Mention de la délivrance du brevet :
**04.07.84 Bulletin 84/27**

(84) Etats contractants désignés :
**DE FR GB IT NL**

(56) Documents cités :
**FR-A- 2 058 451
US-A- 3 065 404
US-A- 3 377 549
US-A- 3 403 328**

(73) Titulaire : **SOCIETE DE PROSPECTION ELECTRIQUE
SCHLUMBERGER
42, rue Saint-Dominique
F-75340 Paris Cedex 07 (FR)
FR IT
Schlumberger Limited
277 Park Avenue
New York, N.Y. 10017 (US)
DE GB NL**

(72) Inventeur : **Ohmer, Hervé
5, Parvis de la Bièvre
F-92160 Antony (FR)**

(74) Mandataire : **Chareyron, Lucien et al
Schlumberger Limited Service Brevets 42, rue
Saint-Dominique
F-75340 Paris Cedex 07 (FR)**

EP 0 035 421 B1

## Description

L'invention se rapporte aux appareils de diagraphie utilisés dans les sondages et plus particulièrement à une enveloppe de sonde perfectionnée pour de tels appareils.

Les appareils de diagraphie utilisés pour l'étude des formations traversées par un sondage comprennent une sonde descendue dans le sondage à l'extrémité d'un câble. Cette sonde est généralement formée par plusieurs enveloppes étanches connectées bout à bout mécaniquement et électriquement. Ces enveloppes étanches peuvent être remplies d'air à la pression atmosphérique ou remplies d'un fluide hydraulique maintenu à la pression du sondage. Elles contiennent des capteurs pour l'acquisition des mesures et des circuits électroniques pour l'alimentation en courant électrique des capteurs ou le traitement des signaux de mesure détectés. Généralement ces enveloppes sont des cylindres métalliques équipés de têtes montées de façon étanche à leurs extrémités.

Pour certaines diagraphies on ne peut pas utiliser d'enveloppe en matériau conducteur qui constituerait un écran entre les capteurs et les formations. De telles diagraphies sont notamment celles qui utilisent comme capteurs des bobines ou des antennes pour les mesures de résistivité électrique, de constante diélectrique, de résonance magnétique nucléaire ou d'autres caractéristiques des formations traversées par le sondage.

Dans le brevet américain US-A-2 857 451 (H.A. Barclay) il est décrit une enveloppe non conductrice susceptible de résister aux pressions du sondage. Cette enveloppe est formée par des cylindres internes en matériau céramique entourés par un cylindre externe réalisé par un tissu imprégné de matériau plastique thermodurcissable. Les cylindres internes résistent à la pression tandis que le cylindre externe assure l'étanchéité et supporte les chocs et les tensions axiales.

Une autre enveloppe non conductrice et résistant à la pression est décrite dans le brevet US-A-3 403 328 (F.N. Fossati et al.) et un mode de réalisation particulier est représenté sur les figures 7A et 7B. Cette enveloppe comprend un empilement de disques internes en céramique et une couche externe en résine renforcée de fibres de verre. De plus, des bandes en fibres de verre sont tendues entre les extrémités de la sonde pour appliquer à l'empilement de disques une précontrainte de compression axiale. Les disques supportent la pression du sondage et la couche intermédiaire résiste aux tractions longitudinales. Les réalisations des figures 1 et 4 de ce brevet comprennent en outre des disques en résine époxy intercalés par endroits dans l'empilement de disques de céramique. Le rôle de ces disques intercalaires est de permettre d'ajuster le coefficient de dilatation thermique moyen et la constante diélectrique moyenne de l'empilement aux valeurs désirées, le nombre et l'épaisseur des disques en époxy étant donc définis en fonction du nombre et de l'épaisseur des disques de céramique.

Dans les enveloppes ci-dessus on a pensé à utiliser des anneaux en céramique empilés dont la résistance à la compression est très élevée. On compense la faible résistance à la traction de la céramique par une couche supplémentaire adaptée à supporter les efforts longitudinaux. Ces enveloppes ont cependant plusieurs inconvénients. La céramique est très sensible aux chocs. Du fait que les anneaux sont en contact les uns avec les autres, les chocs se transmettent parfaitement d'un anneau à l'autre et ne sont pas du tout amortis. Un ou plusieurs anneaux sont donc susceptibles de se casser, notamment lors des manœuvres de surface pour introduire l'appareil dans le sondage pendant lesquelles des chocs importants peuvent se produire. De plus, dans les conditions sévères des sondages, les résines sont soumises à une détérioration plus ou moins rapide due à une hydrolyse par les fluides du sondage. Une telle dégradation est particulièrement gênante aux jonctions de la résine sur les pièces de raccordement des extrémités auxquelles s'appliquent les efforts de traction.

L'invention vise une enveloppe non conductrice pour appareil de diagraphie qui supporte la pression des sondages, résiste aux chocs de façon particulièrement satisfaisante et présente une excellente résistance à la pression et à la dégradation par les fluides du sondage. L'invention vise également un procédé de fabrication d'une telle enveloppe.

Une enveloppe de sonde selon l'invention est décrite dans la revendication 1 de la présente demande. D'autres caractéristiques optionnelles de l'enveloppe sont décrites dans les revendications dépendantes 2-10.

Le procédé de fabrication d'une telle enveloppe de sonde, décrit dans la revendication 11, comprend les étapes suivantes :

— enfiler sur un mandrin monté tournant sur des supports et entre des butées dudit mandrin, une première pièce d'extrémité, un empilement d'anneaux de céramique équipés de joints élastiques, et une deuxième pièce d'extrémité ;

— comprimer lesdits joints entre les pièces d'extrémité en rapprochant les butées l'une de l'autre par des moyens de serrage ;

— en faisant tourner ledit mandrin, appliquer en hélice un enroulement filamentaire de matériau plastique renforcé sur les anneaux, les pièces d'extrémité et les butées ; et

— polymériser ledit matériau en maintenant la compression sur lesdits joints.

Divers aspects de ce procédé sont décrits dans les revendications 12-17.

Les caractéristiques et avantages de l'invention ressortiront d'ailleurs mieux de la description qui va suivre donnée à titre d'exemple en référence aux dessins annexés dans lesquels :

la figure 1 représente une sonde de diagraphie équipée d'une enveloppe selon l'invention et représentée dans un sondage ;

la figure 2 est une coupe longitudinale de l'enveloppe de sonde selon l'invention ;

la figure 3 est une vue en perspective des anneaux internes utilisés dans l'enveloppe de la figure 2 ;

les figures 4A à 4D sont des coupes longitudinales de plusieurs configurations des joints placés entre les anneaux internes de l'enveloppe pour différentes conditions de fabrication et d'utilisation de l'enveloppe ; et

la figure 5 est un schéma du dispositif de fabrication utilisé pour l'enveloppe de la figure 3.

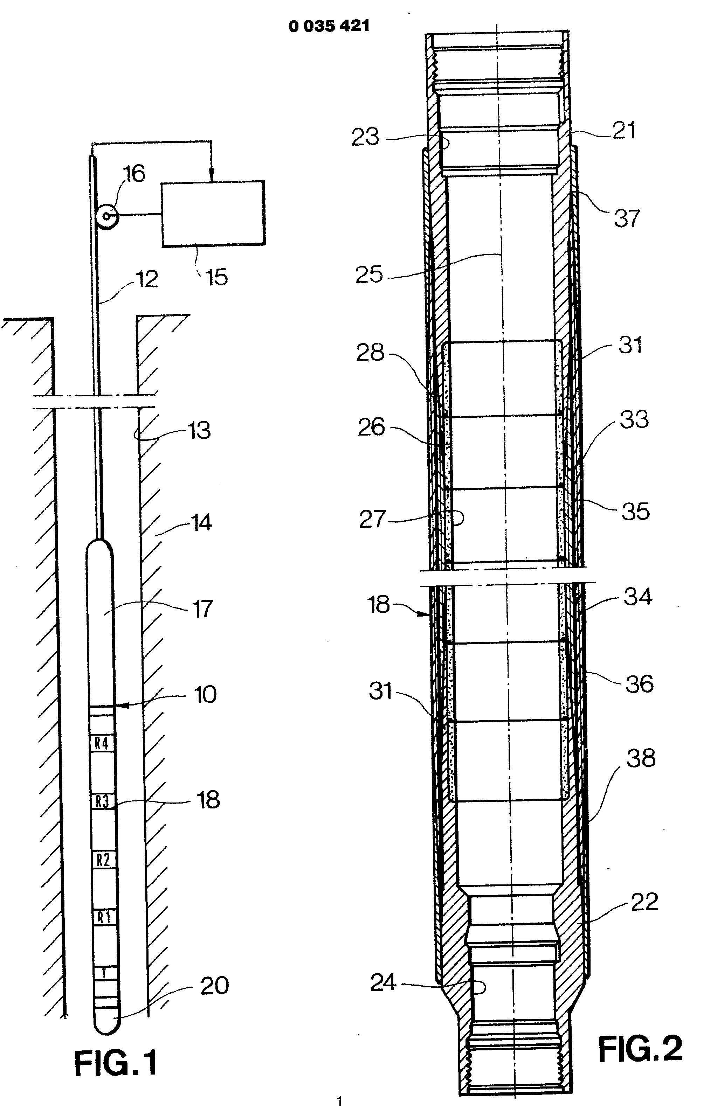

En référence à la figure 1, un appareil de diagraphie comprend une sonde 10 suspendue à l'extrémité d'un câble 12 dans un sondage 13 qui traverse des formations 14. La sonde 10 peut être déplacée le long du sondage 13 par un treuil (non représenté) sur lequel s'enroule le câble 12. Un équipement de surface 15 fournit de l'énergie électrique à la sonde 10 par des conducteurs du câble et traite les informations mesurées provenant de cette sonde. Ces informations sont enregistrées en fonction de la profondeur de la sonde 10, laquelle est obtenue en détectant les déplacements du câble au moyen d'un dispositif de mesure de profondeur 16.

La sonde 10 est par exemple du type décrit dans le brevet français FR-A-2 404 235 (inventeurs : S. Huchital et J. Tabanou) pour déterminer la constante diélectrique et la conductivité des formations. La sonde comprend une enveloppe supérieure métallique 17 contenant des circuits électroniques et une enveloppe inférieure 18 selon l'invention fixée à l'extrémité de l'enveloppe supérieure 17. Comme expliqué dans le brevet mentionné ci-dessus, l'enveloppe 18 contient des capteurs électromagnétiques formés par des bobines ou des antennes et comprenant un émetteur T, deux récepteurs proches R1 et R2 et deux récepteurs éloignés R3 et R4. L'atténuation d'amplitude entre les signaux détectés par les récepteurs R1 et R2 et le déphasage entre les signaux détectés par les récepteurs R3 et R4 sont combinés pour fournir la constante diélectrique et la conductivité électrique des formations. Comme les capteurs sont des bobines ou antennes émettrices ou réceptrices d'énergie électromagnétique, l'enveloppe 18 qui les contient doit être non conductrice. Une enveloppe perfectionnée selon l'invention est représentée sur la figure 2.

En référence à la figure 2, l'enveloppe 18 est représentée sans parties internes telles que capteurs, câblage ou circuits électroniques et sans les têtes de raccordement vissées aux extrémités pour assurer les liaisons mécaniques et électriques avec les éléments de sonde adjacents 17 et 20. Ces têtes de raccordement de type classique ne font pas partie de l'invention et ne seront pas décrites ici. Ces têtes de raccordement se vissent dans des pièces d'extrémité supérieure 21 et inférieure 22 traversées par des alésages axiaux 23 et 24 munis respectivement de taraudages.

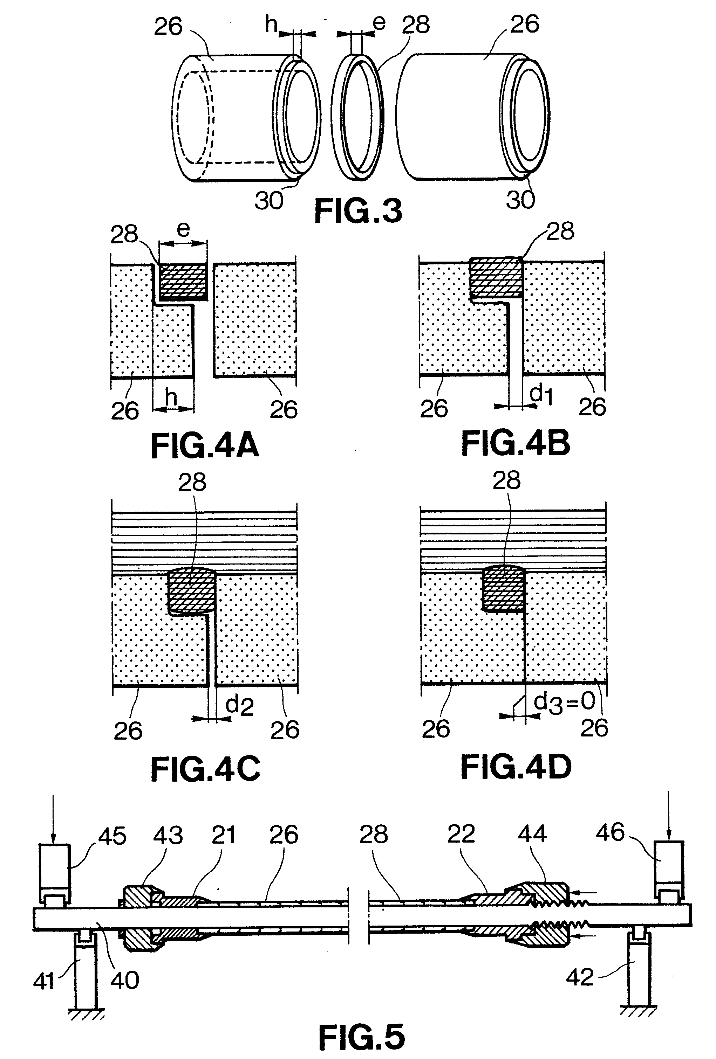

Entre les pièces d'extrémité 21 et 22 est disposé le long de l'axe 25 de l'enveloppe un empilement d'anneaux 26 en céramique formée par certains oxydes métalliques frittés, comme par exemple de l'alumine. Ces anneaux définissent tout le long de l'enveloppe dans le prolongement des alésages 23 et 24, une cavité 27 dans laquelle sont disposés, sur un support interne, les capteurs électromagnétiques T et $R_1$ à $R_4$. Les capteurs électromagnétiques pourraient aussi être des bobines ou antennes réalisées sur la surface externe de certains des anneaux de céramique 26 et protégées par les couches de résine entourant ces anneaux. Les anneaux 26 sont séparés les uns des autres par des joints 28 en élastomère, par exemple en néoprène, intercalés en bride dans des gorges périphériques 30 découpées à la partie supérieure de chaque anneau (figure 3). Les faces internes des gorges 30 forment ainsi des épaulements qui maintiennent en place les joints 28 de façon centrée par rapport aux anneaux. La hauteur des anneaux est de l'ordre de 0,5 à 1 fois leur diamètre pour obtenir un empilement suffisamment flexible avec un coût raisonnable.

Les figures 4A et 4B représentent la configuration des joints 28 lors de deux étapes de la fabrication de l'enveloppe. Les figures 4C et 4D représentent la configuration des joints 28 lorsque l'enveloppe est à la pression atmosphérique (figure 4C) et lorsqu'elle est soumise à la pression hydrostatique élevée au fond d'un sondage (figure 4D).

Les joints 28 dont l'épaisseur e au repos est plus élevée que la hauteur h des gorges 30 (figure 4A), sont choisis de façon à empêcher le contact entre les faces des anneaux successifs lorsque l'enveloppe est soumise à une faible pression extérieure, c'est-à-dire notamment lors des manipulations de surface de l'appareil avant son introduction dans un sondage. Les anneaux sont alors espacés d'une faible distance d2 (figure 4C). Toutefois, sous l'effet d'une forte compression comme celle qui est appliquée au fond du sondage à l'enveloppe 18 remplie d'air à la pression atmosphérique, les joints peuvent être écrasés élastiquement à un point tel que les faces des anneaux successifs soient en contact (distance d3 = 0, figure 4D). L'enveloppe est alors beaucoup plus fragile mais les chocs sont nettement moins violents car ils sont amortis par les fluides du sondage dans lesquels plonge l'appareil. Comme on le verra par la suite, les joints 28 sont par construction soumis à une précontrainte de compression (figure 4B). Par suite de l'élasticité de l'élastomère, cette précontrainte s'applique aux faces opposées des anneaux de céramique qui sont ainsi maintenus en place fermement mais élastiquement. Les joints 28 ont ainsi une double fonction de maintien en compression des anneaux en céramique et d'amortissement des chocs.

Les pièces d'extrémité 21 et 22 comportent un logement dans lequel viennent s'emboîter les premiers anneaux de céramique. Du côté des anneaux 26 chaque pièce d'extrémité comporte une surface conique 31 dans laquelle sont découpées des rainures circulaires pour une meilleure adhérence entre ces pièces et une première couche 33 réalisée autour des anneaux 26. Cette première couche 33 est constituée par une résine thermodurcissable renforcée et de préférence par un enroulement filamentaire en hélice de mèches de fibres de verre imprégnées d'époxy. L'enroulement est réalisé avec un pas important de façon à offrir une résistance à la traction élevée. Autour de la première couche 33 est réalisée une deuxième couche 34 formée par un enrobage d'élastomère tel que le néoprène. Cette couche qui se prolonge jusqu'aux pièces d'extrémité 21 et 22 améliore l'étanchéité de l'enveloppe aux fluides du sondage qui pourraient à la longue contaminer par hydrolyse la couche de résine. Autour de la deuxième couche 34 est disposée une troisième couche 35 réalisée de la même façon et avec le même matériau époxy et fibres de verre que la première couche 33. En outre une quatrième couche 36 constituée par un tissu en fibres de verre imprégné avec une résine plus résiliente comme par exemple de l'époxy est disposée autour de la troisième couche. Cette résine plus résiliente convient mieux pour l'amortissement des chocs et le tissu résiste mieux à l'abrasion qu'un enroulement filamentaire.

Les extrémités des troisième et quatrième couches usinées sous forme conique reçoivent des frettes métalliques 37 et 38 pour renforcer ces extrémités.

Les différentes couches se combinent pour fournir une enveloppe non conductive, résistant aux chocs et aux pressions et présentant une bonne étanchéité.

Les anneaux de céramique 26 résistent à la compression radiale et axiale due à la pression des sondages qui peut dépasser 1 500 bars. Par contre, ces anneaux ont une très faible résistance à la traction et aux chocs. Les efforts longitudinaux de traction qui sont appliqués aux pièces d'extrémité 21 et 22 sont supportés par la première couche 33 d'époxy aux surfaces coniques 31 et aux rainures circulaires. La couche 34 de néoprène améliore la résistance de l'enveloppe à la dégradation des fluides du sondage. Les couches extérieures 35 et 36 protègent la couche 34 et améliorent la résistance aux chocs.

Dans un mode de réalisation, on a obtenu de bons résultats pour une enveloppe de diamètre extérieure 115 mm dans laquelle les anneaux d'alumine avaient 5 mm d'épaisseur et 60 mm de hauteur, la première couche 33 en résine 6 mm d'épaisseur, la deuxième couche 34 en élastomère 1,5 mm, la troisième couche 35 en résine 5,5 mm et la couche 36 externe 1,5 mm.

Pour la fabrication de cette enveloppe une précontrainte de compression est appliquée aux anneaux de céramique comme représenté sur la figure 5. Sur un mandrin 40 monté tournant sur des supports à rouleaux 41-42 est disposée une butée fixe 43 adaptée à recevoir la pièce d'extrémité 21. Sur le mandrin 40 on enfile la pièce d'extrémité 21 puis les anneaux d'alumine 26 avec leurs joints 28. L'ensemble présente alors la configuration de la figure 4A. A l'extrémité droite de la série d'anneaux on enfile la pièce d'extrémité 22 puis une butée mobile 44 que l'on visse sur un filetage du mandrin en comprimant les joints comme représenté sur la figure 4B. On applique ensuite la première couche 33 en enroulant en hélice sur l'ensemble précédemment réalisé les mèches de fibres de verre imprégnées d'époxy avec un pas relativement élevé pour mieux résister à la traction. L'enroulement est obtenu par de nombreux allers et retours, en tournant à chaque extrémité autour des butées 43 et 44. Pendant la polymérisation on maintient la compression sur les joints et l'on fait tourner le mandrin 40 en appliquant sur ses extrémités des forces descendantes par des dispositifs à rouleaux 45-46 afin de compenser la flèche créée par le poids suspendu entre les supports 41-42. Après polymérisation, on découpe l'époxy entourant les butées 43 et 44 et l'on usine la couche 33 au diamètre voulu. On procède alors à l'enrobage de la couche d'élastomère 34. Un deuxième enroulement filamentaire similaire au premier est réalisé pour constituer la couche 35 et, après usinage au diamètre désiré, on enroule la dernière couche 36 de tissu imprégné d'époxy. On usine en forme de cône les extrémités de l'enveloppe et les frettes 37 et 38, enduites de colle, sont montées à force sur ces extrémités coniques.

L'enveloppe est alors prête à recevoir les têtes de raccordement des extrémités et le support interne des capteurs.

On a ainsi réalisé une enveloppe non conductrice qui satisfait aux exigences de résistance aux conditions d'environnement que l'on rencontre au cours des opérations dans les forages.

## Revendications

1. Enveloppe de sonde pour appareil de diagraphie, adaptée à recevoir des capteurs (T, $R_1$, $R_2$, $R_3$, $R_4$) pour l'acquisition de mesures dans les sondages comprenant :
— des pièces d'extrémité (21, 22) pour permettre le raccordement de l'enveloppe ;
— un empilement d'anneaux (26) de céramique disposés coaxialement entre les pièces d'extrémité (21, 22) pour former un cylindre résistant à la pression du sondage, ledit cylindre étant adapté à recevoir lesdits capteurs ; et
— une couche (33) de matériau plastique renforcé disposée à l'extérieur de l'empilement d'anneaux (26) entre les pièces d'extrémité (21, 22) pour résister aux efforts longitudinaux appliqués aux pièces d'extrémité (21, 22) ;
caractérisée en ce qu'elle comprend de plus :
— des joints élastiques (28) disposés entre lesdits anneaux (26) pour empêcher un contact direct entre les faces des anneaux successifs, ladite couche (33) de matériau plastique étant adaptée à appliquer une force de compression axiale auxdits anneaux (26) pour maintenir lesdits joints (28) en compression au moins lors des manipulations en surface de l'enveloppe.

2. Enveloppe de sonde selon la revendication 1, caractérisée en ce que chacun desdits joints (28) est maintenu en place de façon centrée par rapport auxdits anneaux (26) par un épaulement circulaire (30) réalisé sur une face d'extrémité de chacun desdits anneaux.

3. Enveloppe de sonde selon l'une des revendications 1 et 2, caractérisée en ce qu'elle comprend de plus une couche de matériau élastomère (34) disposée autour de ladite couche de matériau plastique (33) pour améliorer la résistance de la couche de matériau plastique à la détérioration des fluides du sondage.

4. Enveloppe de sonde selon la revendication 3, caractérisée en ce qu'elle comprend de plus une couche supplémentaire (35) de matériau plastique renforcé disposée autour de la couche de matériau élastomère (34) pour protéger cette dernière.

5. Enveloppe de sonde l'une des revendications 1 à 4, caractérisée en ce qu'elle comprend une couche externe (36) en matériau plastique plus résiliente pour améliorer la résistance aux chocs de ladite enveloppe.

6. Enveloppe de sonde selon l'une des revendications précédentes, caractérisée en ce que les anneaux de céramique (26) sont réalisés en alumine frittée.

7. Enveloppe de sonde selon l'une des revendications précédentes, caractérisée en ce que la couche de matériau plastique renforcé (33) est réalisée par un enroulement filamentaire en hélice de fibres imprégnées de résine thermodurcissable.

8. Enveloppe de sonde selon la revendication 7, caractérisée en ce que l'enroulement filamentaire est effectué avec un pas élevé choisi pour mieux résister aux efforts de traction qui peuvent être rencontrés dans les sondages.

9. Enveloppe de sonde selon l'une des revendications précédentes, caractérisée en ce qu'au moins l'un desdits capteurs est réalisé sur la surface externe d'un desdits anneaux de céramique (26) protégé par ladite couche de matériau plastique renforcé (33).

10. Enveloppe de sonde selon l'une des revendications précédentes, caractérisée en ce que lesdits anneaux (26) ont une hauteur comprise entre 0,5 et 1 fois leur diamètre.

11. Procédé de fabrication d'une enveloppe de sonde selon l'une des revendications précédentes, caractérisé en ce qu'il comprend les étapes suivantes :

— enfiler sur un mandrin (40) monté tournant sur des supports (41, 42) et entre des butées (43, 44) dudit mandrin, une première pièce d'extrémité (21), un empilement d'anneaux de céramique (26) équipés de joints élastiques (28), et une deuxième pièce d'extrémité (22) ;

— comprimer lesdits joints entre les pièces d'extrémité en rapprochant les butées l'une de l'autre par des moyens de serrage ;

— en faisant tourner ledit mandrin, appliquer en hélice un enroulement filamentaire (33) de matériau plastique renforcé sur les anneaux, les pièces d'extrémité et les butées ; et

— polymériser ledit matériau en maintenant la compression sur lesdits joints.

12. Procédé de fabrication selon la revendication 11, caractérisé en ce qu'il comprend de plus, pendant la polymérisation, l'étape consistant à faire tourner le mandrin et à appliquer à ses extrémités des forces verticales descendantes pour compenser la flèche créée sur le mandrin par le poids appliqué entre les supports pour obtenir une enveloppe plus rectiligne.

13. Procédé de fabrication selon l'une des revendications 11 et 12, caractérisé en ce que l'étape d'application de l'enroulement est effectuée avec un pas élevé pour mieux résister à la traction.

14. Procédé de fabrication selon l'une des revendications 11 à 13, caractérisé en ce qu'il comprend de plus une étape d'enrobage d'une couche d'élastomètre (34) autour dudit enroulement filamentaire (33) de matériau plastique.

15. Procédé de fabrication selon la revendication 14, caractérisé en ce qu'il comprend une étape d'application d'un enroulement filamentaire supplémentaire de matériau plastique renforcé (35) autour de ladite couche d'élastomère (34).

16. Procédé de fabrication selon la revendication 15, caractérisé en ce qu'il comprend de plus une étape consistant à enrouler une couche (36) de tissu imprégné de matière plastique plus résiliente autour de l'enroulement filamentaire supplémentaire (35) pour un meilleur amortissement des chocs.

17. Procédé de fabrication selon l'une des revendications 11 à 16, caractérisé en ce que l'étape d'application d'un enroulement filamentaire d'épaisseur prédéterminée consiste à enrouler une couche d'une épaisseur supérieure à l'épaisseur prédéterminée et à usiner ladite couche après polymérisation jusqu'à l'épaisseur prédéterminée.

**Claims**

1. Sonde housing for logging apparatus, adapted to receive transducers (T, $R_1$, $R_2$, $R_3$, $R_4$) for the acquisition of measurements in boreholes, comprising :

— end pieces (21, 22) allowing the connection of the housing ;

— a stack of ceramic rings (26) arranged coaxially between the end pieces (21, 22) to form a cylinder resistant to the pressure of the borehole, said cylinder being adapted to receive said transducers ; and

— a layer (23) of reinforced plastic material placed outside the stack of rings (26) between the end pieces (21, 22) to resist the longitudinal forces applied to the end pieces (21, 22) ; characterized in that it further comprises :

— elastic seals (28) placed between said rings (26) to prevent direct contact between the faces of the successive rings, said layer (33) of plastic material being adapted to apply an axial compression force to said rings (26) in order to maintain said seals (28) under compression at least during the surface manipulations of the housing.

2. Sonde housing according to claim 1, characterized in that each of said seals (28) is kept centered in place with respect to said rings (26) by a circular shoulder (30) made on one end face of each of said rings.

3. Sonde housing according to either of claims 1 or 2, characterized in that it further comprises a layer of elastomer material (34) placed around said layer of plastic material (33) to improve the resistance of the layer of plastic material to deterioration by the borehole fluids.

4. Sonde housing according to claim 3, characterized in that it further comprises and additional layer (35) of reinforced plastic material placed around the layer of elastomer material (34) to protect the latter.

5. Sonde housing according to any of claims 1 to 4, characterized in that it comprises an outer layer (36) in more resilient plastic material to improve the shock resistance of said housing.

6. Sonde housing according to any of the preceding claims, characterized in that the ceramic rings (26) are made of fritted alumina.

7. Sonde housing according to any of the preceding claims, characterized in that the layer of reinforced plastic material (33) is made by a helical filament winding of fibers impregnated with thermosetting resin.

8. Sonde housing according to claim 7, characterized in that the filament winding is carried out with a high pitch chosen to better resist the traction forces which can be encountered in boreholes.

9. Sonde housing according to any of the preceding claims, characterized in that at least one of said transducers is placed on the outer surface of one of said ceramic rings (26) protected by said layer of reinforced plastic material (33).

10. Sonde housing according to any of the preceding claims, characterized in that said rings (26) have a height between 0.5 and once their diameter.

11. Method for manufacturing a sonde housing according to any of the preceding claims, characterized in that it comprises the following steps :
— slipping onto a mandrel (40) mounted rotatably on supports (41, 42) and between stops (43, 44) of said mandrel a first end piece (21), a stack of ceramic rings (26) equipped with elastic seals (28), and a second end piece (22) ;
— compressing said seals between the end pieces by bringing the stops toward each other using tightening means ;
— by turning said mandrel, applying helically a reinforced plastic filament winding (33) on the rings, the end pieces and the stop ; and
— polymerizing said material while maintaining the compression on said seals.

12. Manufacturing method according to claim 11, characterized in that it further comprises, during polymerization, the step consisting in turning the mandrel and in applying to its ends vertical downward forces to compensate for the deflection created on the mandrel by the weight applied between the supports to obtain a more rectilinear housing.

13. Manufacturing method according to either of claims 11 or 12, characterized in that the winding application step is carried out with a high pitch for better traction resistance.

14. Manufacturing method according to any of claims 11 to 13, characterized in that it further comprises a step for applying an elastomer coating (34) around said filament winding (33) of plastic material.

15. Manufacturing method according to claim 14, characterized in that it comprises a step for the application of an additional filament winding of reinforced plastic material (35) around said elastomer coating (34).

16. Manufacturing method according to claim 15, characterized in that it further comprises a step consisting in winding a layer (36) of fabric impregnated with a more resilient plastic around the additional filament winding (35) for better shock absorption.

17. Manufacturing method according to any of claims 11 to 16, characterized in that the step for applying a filament winding of a predetermined thickness consists in winding a layer having a thickness greater than the predetermined thickness and in machining said layer after polymerization down to the predetermined thickness.

**Ansprüche**

1. Sondenhülle für einen Diagraphie-Apparat, ausgebildet zur Aufnahme von Meßaufnehmern ($R$, $R_1$, $R_2$, $R_3$, $R_4$) zum Gewinnen von Messungen in Sondierungen, mit :
— Endstücken (21, 22) zum Ermöglichen der Verbindung der Hülle,
— einem Stapel von Keramikringen (26), die koaxial zwischen den Endstücken (21, 22) angeordnet sind zum Bilden eines gegen den Sondierungsdruck resistenten Zylinders, welcher Zylinder ausgebildet ist zur Aufnahme der Meßaufnehmer und mit
— einer Beschichtung (33) aus verstärktem Kunststoffmaterial, die auf der Außenseite des Ringstapels (26) zwischen den Endstücken (21, 22) angeordnet ist, um den Längsbelastungen zu widerstehen, die auf die Endstücke (21, 22) zur Einwirkung gebracht werden,
dadurch gekennzeichnet, daß sie darüberhinaus umfaßt :
— elastische Dichtungen (28), die zwischen den Ringen (26) angeordnet sind zum Verhindern eines direkten Kontaktes zwischen den aufeinanderfolgenden Flächen der Ringe, wobei die Beschichtung (33) aus Kunststoffmaterial ausgebildet ist zum Übertragen einer axialen Druckkraft auf die Ringe (26), um die Dichtungen (28) unter Kompression zu halten mindestens während Manipulationen der Hülle an der Oberfläche.

2. Sondenhülle nach Anspruch 1, dadurch gekennzeichnet, daß jede der Dichtungen (28) zentriert bezüglich der Ringe (26) plaziert gehalten ist durch eine Ringschulter (30), die auf der Außenseite jedes der Ringe ausgebildet ist.

3. Sondenhülle nach einem der Ansprüche 1 und 2, dadurch gekennzeichnet, daß sie darüberhinaus eine Beschichtung aus Elastomermaterial (34) umfaßt, die um die kunststoffmaterialbeschichtung (33) angeordnet ist zum Verbessern der Resistenz der Kunststoffmaterialbeschichtung gegen Beschädigungen durch Sondierungsfluide.

4. Sondenhülle nach Anspruch 3, dadurch gekennzeichnet, daß sie außerdem eine Zusatzbeschichtung (35) aus verstärktem Kunststoffmaterial umfaßt, die um die Elastomermaterialbeschichtung (34) zwecks Schutzes der letzteren angeordnet ist.

5. Sondehülle nach einem der Ansprüche 1 bis 4, dadurch gekennzeichnet, daß sie eine Außenschichtung (36) aus elastischerem Kunststoffmaterial aufweist, um die Resistenz der Hülle gegen Stöße zu verbessern.

6. Sondenhülle nach einem der vorangehenden Ansprüche, dadurch gekennzeichnet, daß die Keramikringe (26) aus gefrittetem Aluminiumoxyd gefertigt sind.

7. Sondenhülle nach einem der vorangehenden Ansprüche, dadurch gekennzeichnet, daß die Beschichtung aus verstärktem Kunststoffmaterial (33) durch einen schraubenlinienförmigen Wickel aus mit wärmehärtbarem Harz imprägnierten Fasern gefertigt ist.

8. Sondenhülle nach Anspruch 7, dadurch gekennzeichnet, daß der Faserwickel mit einer erhöhten Steigung ausgebildet ist, gewählt zur Verbessern der Festigkeit gegenüber Zugkräften, die in den Sondierungen auftreten können.

9. Sondenhülle nach einem der vorangehenden Ansprüche, dadurch gekennzeichnet, daß mindestens einer der Meßaufnehmer auf der Außenoberfläche eines der Keramikringe (26) geschützt durch die Beschichtung aus verstärktem Kunststoffmaterial (33) angeordnet ist.

10. Sondenhülle nach einem der vorangehenden Ansprüche, dadurch gekennzeichnet, daß die Ringe (26) eine Höhe zwischen dem 0,5- und 1-fachen ihres Durchmessers aufweisen.

11. Verfahren zum Fertigen einer Sondenhülle nach einem der vorangehenden Ansprüche, dadurch gekennzeichnet, daß es die folgenden Schritte aufweist :
— Auffädeln eines ersten Endstückes (21) eines Stapels von mit elastischen Dichtungen (28) versehenen Keramikringen (26) und eines zweiten Endstückes (22) auf einen drehbaren auf Abstützungen (41, 42) montierten Dorn (40) zwischen Anschlägen (43, 44) desselben,
— Komprimieren der Dichtungen zwischen den Endstücken durch Annähern der Anschläge mittels Spannmitteln,
— Aufbringen eines Fadenschraubenwickels (33) aus verstärktem Kunststoffmaterial auf die Ringe, die Endstücke und die Anschläge unter Drehung des Dorn und
— Polymerisieren des Materials unter Aufrechterhaltung der Kompression auf die Dichtungen.

12. Fertigungsverfahren nach Anspruch 11, dadurch gekennzeichnet, daß es zusätzlich während der Polymerisation den Schritt umfaßt, daß man den Dorn Umlaufen läßt und auf seine Enden vertikal abwärts gerichtete kräfte wirken läßt zur Kompensation der Durchbiegung, erzeugt an dem Dorn durch das zwischen den Abstützungen wirkende Gewicht, um eine geradlinigere Hülle zu erhalten.

13. Fertigungsverfahren nach einem der Ansprüche 11 und 12, dadurch gekennzeichnet, daß der Schritt des Aufbringens des Wickels mit einer erhöhten Steigung zwecks besserer Resistenz gegen Traktion vorgenommen wird.

14. Fertigungsverfahren nach einem der Ansprüche 11 bis 13, dadurch gekennzeichnet, daß es zusätzlich den Schritt der Umhüllung mit einer Elastomerbeschichtung (34) um die Fadenwicklung (33) aus Kunststoffmaterial umfaßt.

15. Fertigungsverfahren nach Anspruch 14, dadurch gekennzeichnet, daß es den Schritt des Anbringens eines zusätzlichen Fadenwickels aus verstärktem Kunststoffmaterial (35) um die Elastomerbeschichtung (34) umfaßt.

16. Fertigungsverfahren nach Anspruch 15, dadurch gekennzeichnet, daß es darüberhinaus den Schritt des Aufrollens einer Beschichtung (36) aus Gewebe umfaßt, das mit elastischerem Kunststoffmaterial imprägniert ist um die zusätzliche Fadenumwicklung (35) zwecks besserer Dämpfung von Stößen.

17. Fertigungsverfahren nach einem der Ansprüche 11 bis 16, dadurch gekennzeichnet, daß der Schritt des Anbringens der Fadenumwicklung vorgegebener Dicke das Aufwickeln einer Schicht größerer Dicke als der vorgegebenen Dicke umfaßt und das Abtragen der Schicht nach der Polymerisation bis zur vorgegebenen Dicke.

**FIG.1**

**FIG.2**

FIG.3

FIG.4A  FIG.4B

FIG.4C  FIG.4D

FIG.5